# EUROPEAN PATENT APPLICATION

(11) **EP 4 660 909 A1**
(43) Date of publication of application: **10.12.2025**
(21) Application number: 25178753.7
(22) Date of filing: 26.05.2025
(51) Int. Cl.: G06Q 10/0631

(54) **PROJECT SUPPORT SYSTEM**

(30) Priority: 05.06.2024 JP 2024091566
(71) Applicant: Prime Planet Energy & Solutions, Inc., Chuo-ku, Tokyo 103-0022 (JP)
(72) Inventor: ASAKURA, Jun, Tokyo, 103-0022 (JP); ONIKI, Motoyuki, Tokyo, 103-0022 (JP)
(74) Representative: Kuhnen & Wacker Patent- und Rechtsanwaltsbüro PartG mbB

(57) **Abstract**

A project support system (10) includes at least one processor configured to execute a first process (s1) of acquiring requirement data (100) recording information on a requirement content required in a project, and a second process (s2) of identifying a responsible department that is highly relevant to the requirement content recorded in the requirement data (100).

## Description

### BACKGROUND

The present invention relates to a project support system.

JP 2005-293403 A discloses a design work support device that displays a business process template indicating a design work procedure on an operation screen panel, and supports offering of design information and accumulating design results according to the design work procedure shown in the business process template.

The design work support device includes a use history automatic recording means for recording association information between the design work procedure and the design information that is offered to the design work procedure or created as the design result in the design work procedure, as a use history for each design information, and a design information use history database that stores and manages the use history. Such a design work support device is said to be able to accumulate the use history of the design information without requiring user effort, and to make it easier to reuse design results.

PCT/International Publication No. WO 2023/218659 discloses a software development support device. The software development support device disclosed in the publication includes a similar business extraction unit configured to calculate, for each of workflows of a plurality of first businesses for which software corresponding to each task has already been developed, a degree of similarity with a workflow of a second business for which software corresponding to each task has not yet been developed, and to extract some of the first businesses from the plurality of first businesses based on the degree of similarity, and a software output unit configured to output software groups corresponding to the workflow of the extracted first businesses. This reduces development cost of software.

### SUMMARY

The present inventors intend to make it easier to draft implementation plans for projects.

According to the present disclosure, a project support system includes a department ID recording unit recording a department ID assigned to a responsible department handling a project, and a processing unit.

The processing unit is configured to cause at least one processor to execute a first process of acquiring requirement data recording information on a requirement content required in the project, and a second process of identifying a responsible department having high relevance to the requirement content recorded in the requirement data.

Such a project support system is able to identify a responsible department having high relevance to the requirement content required in the project. Therefore, it is easier to make an implementation plan of a project.

### BRIEF DESCRIPTION OF THE DRAWINGS

Fig. 1 is a block diagram of a project support system 10 proposed herein.
Fig. 2 is a view schematically illustrating an example of requirement data that are required in a project that is acquired in a first process s1.
Fig. 3 is a view illustrating an example of output data 200 that are output.
Fig. 4 is a schematic view of a deep learning model 300.
Fig. 5 is a schematic view of a deep learning model 300A according to another embodiment.

### DETAILED DESCRIPTION

Hereinbelow, embodiments of the technology according to the present disclosure will be described with reference to the drawings. It should be noted, however, that the embodiments disclosed herein are, of course, not intended to limit the invention. The drawings are depicted schematically and do not necessarily accurately depict actual objects. The features and components that exhibit the same effects are designated by the same reference symbols as appropriate, and the description thereof will not be repeated as appropriate.

### Project Support System 10

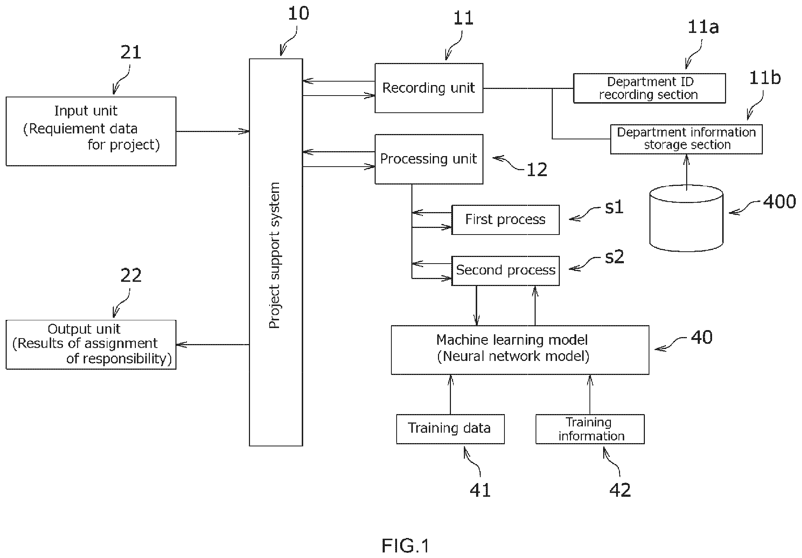

Fig. 1 is a block diagram of a project support system 10 proposed herein. Herein, the term "project" refers to a series of activities that are executed in a planned manner to accomplish specific objectives, which is a plan that is executed by a plurality of departments to which their responsibilities are assigned. The project support system 10 is a system that outputs information for facilitating assignment of responsibilities to a plurality of departments in making a plan for executing a project.

Herein, the project support system 10 is typically embodied by a computer system. The computer that embodies the project support system 10 may include, for example, an interface (I/F) that receives data or the like from external devices, a central processing unit (CPU) that executes instructions of a program, a ROM that stores the program to be executed by the CPU, a RAM that is used as a working area for deploying the program, and a memory storage device (or a recording medium), such as a memory, that stores the foregoing program and various data. Each of various functions of the project support system 10 may be embodied by a cooperative combination of a predetermined program (software) and a computer (hardware) that executes the predetermined program. Although not shown in the drawings, the project support system 10 may be one in which a plurality of controllers cooperate with each other. The project support system 10 may be implemented by, for example, a cooperative process of a plurality of computers connected via a network.

The programs for executing various functions of the project support system 10 may be stored in, for example, a non-transitory computer readable medium. It is also possible that the program may be supplied to a computer through such a non-transitory computer readable medium. Examples of the non-transitory computer readable medium may include magnetic recording media (such as flexible disks, magnetic tapes, and hard disk drives) and CD-ROMs. In addition, the program may be installed in a computer through a network such as the Internet. The program may be executed by a plurality of processors.

As illustrated in Fig. 1, the project support system 10 includes a recording unit 11, a processing unit 12, an input unit 21, and an output unit 22. To the input unit 21, requirement data of a project are entered. The output unit 22 is configured to present a plurality of departments that have high relevancy to requirement contents recorded in requirement data entered in the input unit 21, through the processing by the project support system 10. Although the project herein is not particularly limited to any particular one, it may be a project such as new product development. When this is the case, the requirement contents may include required specifications and target specifications of the new product.

### Recording Unit 11

The recording unit 11 is a unit that records various data of the project support system 10. The recording unit 11 includes a department ID recording section 11a. The recording unit 11 may also include a recording section that records various data, other than the department ID recording section 11a.

### Department ID Recording Section 11a

The department ID recording section 11a is a memory that records department IDs. Department IDs are each a unique identifier assigned to each of a plurality of responsible departments that handle a project. The responsible departments that are assigned the department IDs may include not just departments with a track record of having handled projects in the past but also departments that may handle projects in the future and newly-established departments. In the project support system 10, such a department ID recording section 11a may record unique identifiers that are respectively assigned to a plurality of responsible departments in association with the responsible departments. In addition, the project support system 10 may be configured to cause a computer to execute a process for recording unique identifiers in association with responsible departments in the department ID recording section 11a.

### Processing Unit 12

The processing unit 12 is a unit that is configured to cause at least one processor to execute predetermined processes of the project support system 10. The processes executed by the processing unit 12 include a first process s1 and a second process s2 described in the following.

### First Process s1

The first process s1 is a process of acquiring requirement data that record information on requirement contents required in the project. Herein, the requirement contents required in the project are, when the project is one that is relevant to product development, for example, those in which items such as required specifications and target specifications relating to the product development are classified item by item. The requirement data that record information on requirement contents may be those in which information on requirement contents are recorded as computer-readable information.

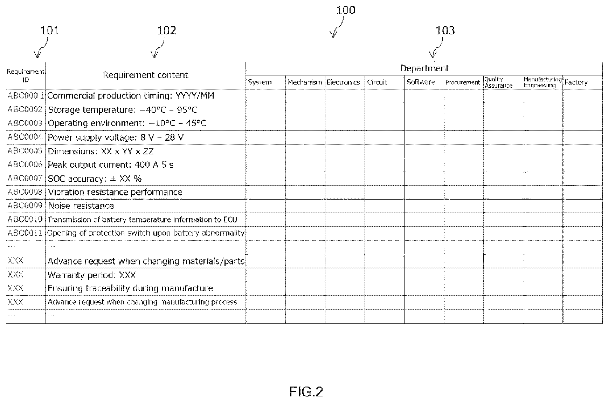

Fig. 2 is a view schematically illustrating an example of requirement data 100 that are required in a project that is acquired in the first process s1. In the example shown in Fig. 2, requirement data 100 required in the project are presented in a spreadsheet. Herein, each of the requirement data 100 required in the project is assigned a respective requirement ID. Referring to Fig. 2, in a column 101 for requirement ID, unique identifiers may be assigned individually to respective required contents in the project, such as ABC0001, ..., ABC0011, ..., etc. A column 102 for required contents is different for each project. Fig. 2 shows an example of requirement contents in a development project for developing a new lithium-ion secondary battery product. A column 103 for department lists departments that can handle projects in order. As illustrated in Fig. 2, the column 103 for responsible department may list responsible departments that are recorded in the department ID recording section 11a in order. In such a spreadsheet, relationships with a plurality of responsible departments that handle the project can be recorded, in respective corresponding cells, for the requirement contents associated with requirement IDs. Herein, the requirement contents may be changed from one project to another. The plurality of responsible departments that handle the project may also be changed from one project to another.

In the example shown in Fig. 2, the requirement contents of a development project for a lithium-ion secondary battery include commercial production timing, storage temperature, operating environment, power supply voltage, dimensions, peak output current during use, detected SOC accuracy, vibration resistance performance, noise resistance, transmission of battery temperature information to ECU, opening of protection switch upon battery abnormality, advance request when changes in materials or parts occur, warranty period, ensuring traceability during manufacture, advance request when changing manufacturing processes, and the like. Herein, the storage temperature is a content that is required as an environment temperature in which the manufactured lithium-ion secondary batteries are stored. The operating environment is a content that is required as an environment temperature in which the manufactured lithium-ion secondary batteries are used. Thus, in the embodiment shown in Fig. 2, various types of requirement contents for the lithium-ion secondary batteries to be manufactured are itemized and listed as the requirement contents. The columns for departments may be listed according to the departments that handle the project, such as system, mechanism, electronics, circuit, software, procurement, quality assurance, manufacturing engineering department, factories, and so forth. Each of the departments may be assigned a department ID as an identifier that can be identified by a computer.

The first process s1 may acquire the requirement data 100 that record the information on requirement contents required in the project in this way. In the project support system 10, such requirement data 100 may be recorded in association with the requirement IDs in the spreadsheet, as illustrated in Fig. 2. In addition, for each of the requirement contents, the spreadsheet may contain a plurality of cells that are prepared corresponding to the plurality of responsible departments. Thus, for the requirement data 100, the required specifications and target specifications relating to the development, for example, may be summarized item by item in data.

### Second Process s2

The second process s2 is a process of identifying a responsible department having high relevance to a requirement content recorded in the requirement data 100. The requirement data 100 shown in Fig. 2 may be input data in the process of identifying a responsible department having high relevance to the requirement content. The responsible department having high relevance to the requirement content recorded in requirement data 100 may be a department that has a track record of handling the requirement content in a past project, or a department having an item that is planned to be handled by that department, which matches or is similar to the requirement content. Thus, the second process s2 may be a means for allocating a responsible department to each of the items in the required specifications and the target specifications recorded in the requirement data 100.

The process that implements the second process s2 may include, for example, various types of processes that are configured to be able to identify a responsible department having high relevance to a requirement content based on the requirement content recorded in the requirement data 100.

The second process s2 may be a process of identifying a responsible department having high relevance to a requirement content recorded in the column 102 for required content the requirement data 100, for example, by using a machine learning model 40. The machine learning model may include an input layer to which the requirement data 100 obtained in the first process s1 are entered, and an output layer to which a department ID of the responsible department having high relevance to the requirement content recorded in the column 102 for required contents in the requirement data 100. In this case, the machine learning model may learn the correlation of the requirement contents recorded in the requirement data 100 with the information on the track record of handling requirement contents in past projects for each department and with the information on the items that are planned to be handled by the departments by machine learning in advance. In addition, the machine learning model may be configured to output responsible departments that have high relevance to requirement contents recorded in the requirement data 100.

The second process s2 may be configured to enter the requirement data obtained in the first process s1 into the input layer of the machine learning model and to obtain from the output layer the department ID of the responsible department that has a high degree of relevance to the requirement data. The machine learning model may be a pre-trained machine learning model that has been trained based on the training data that record correlations between requirement data recording the information on the requirement contents required in projects and predetermined responsible departments that handle the projects. Herein, existing techniques may be applied to the machine learning. The machine learning model may adopt, for example, a neural network model. The machine learning model may further include a deep learning model, which includes a plurality of intermediate layers of a neural network. Deep learning may include a GUI (Graphical User Interface) tool that can be operated without writing code. Deep learning allows, by training the system with appropriate training data, the system to present, as candidates, a plurality of departments that have high relevancy to the requirement contents required in a project more accurately without requiring human efforts.

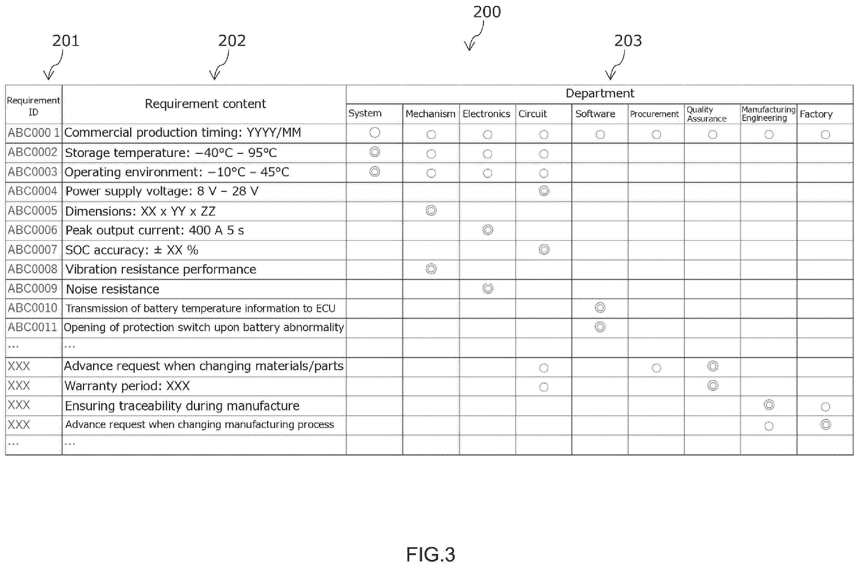

Fig. 3 is a view illustrating an example of output data 200 that are output. As illustrated in Fig. 3, the output data 200 may be output in, for example, a spreadsheet format. In the embodiment shown in Fig. 3, the output data 200 may be in a spreadsheet format that is similar to the format of the input data (requirement data 100). In a column 201 for requirement ID in the output data 200, the same IDs as those in the requirement data 100 are assigned. In a column 203 for department in output data 200, symbols are assigned to a plurality of departments that have high relevancy to the requirement contents listed in a column 202 for requirement content that are required in the project. In the cells corresponding to the departments, double circles "⊚" and white circles "∘" are entered in a descending order of relevancy to the requirement contents required in the project. Herein, double circle "⊚" indicates a high degree of relevancy, and single circle "∘" indicates a middle degree of relevancy. Such output data enable the user to understood the relevancy between the requirement contents required in the project and the departments in an overview. Also, based on the output, the user is allowed to easily perform the work of determining the department that handles the requirement content required in the project.

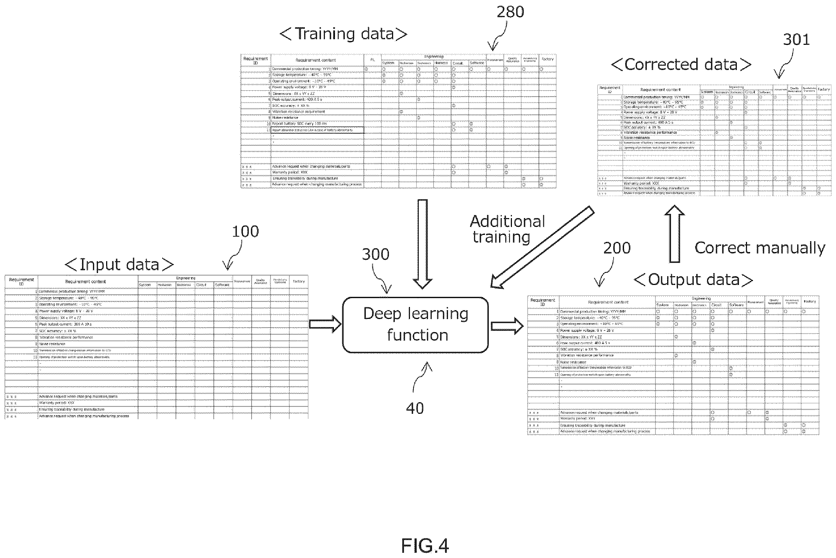

Herein, Fig. 4 is a schematic view of a deep learning model 300. As illustrated in Fig. 4, the deep learning model 300 uses the requirement data 100 as shown in Fig. 2 as input data, and outputs the output data 200 (see Fig. 3) in which a plurality of departments having high relevancy to the requirement contents required in the project, which are listed in the column 202 for requirement content, are marked with symbols in the column 203 for department. Although Fig. 4 illustrates the deep learning model 300 as an example, the deep learning model 300 should be understood as being one form of machine learning model or neural network model, and it may be replaced with a machine learning model or a neural network model as appropriate, to the extent permitted.

Herein, as illustrated in Fig. 4, the project support system 10 may be configured to cause at least one processor to execute a process of updating the machine learning model. Fig. 4 illustrates the deep learning model 300 as an example of the machine learning model. The accuracy of the machine learning model such as the deep learning model 300 is improved as training is repeated.

Herein, the training data for the deep learning model 300 as the machine learning model may be information that records the relationship between the requirement contents recorded in the requirement data 100 and the departments having high relevance to the requirement contents. For example, the machine learning model may learn the information or the like, which was prepared in the past, that records the relationship between the requirement contents recorded in the requirement data 100 and the departments having high relevance to the requirement contents. Such training data may include, for example, document data 280 for responsibility assignment to each of the departments, which were manually created in the past.

The project support system 10 need not finally determine the department that handles the requirement content recorded in the requirement data 100 in the project. The determiner that determines the department in charge of the requirement contents of the project may be the user (human). From such a viewpoint, the project support system 10 may present document data that serve as a reference when a person in charge determines the department in charge of the requirement content recorded in the requirement data. As illustrated in Fig. 4, the training data that are learnt by the deep learning model 300 may use corrected data 301, in which the relationship between the requirement contents recorded in the requirement data presented by the project support system 10 and the department in charge is corrected by a human.

Thus, the project support system 10 may be configured to cause at least one processor to execute a process of acquiring corrected data 301 in which relationships with responsible departments that are output from the output layer of the deep learning model 300 (machine learning model) have been corrected, and a process of updating the deep learning model 300 by training the deep learning model 300 using the corrected data 301 as training data. Utilizing the corrected data 301 corrected by a human as additional training data improves the accuracy of the deep learning model 300.

In the deep learning model 300, the computer itself learns which part of the requirement data 100 is to be focused on in outputting the departments having high relevancy. The deep learning model 300 eliminates the need for a human to instruct the computer which part of the requirement data 100 is to be focused on in outputting the departments having high relevancy. Moreover, the accuracy of the computer improves in response to the training. Therefore, it is expected that the use of the deep learning model 300 for the project support system 10 significantly reduces human efforts.

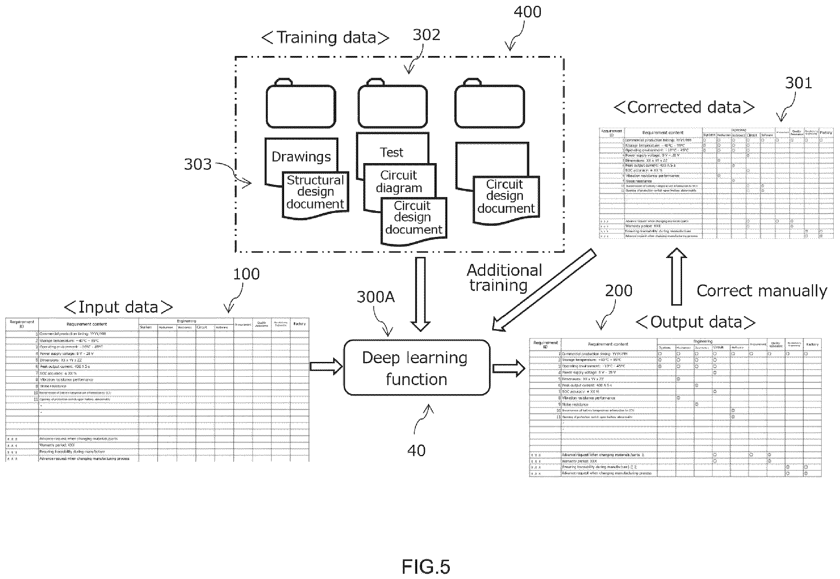

Fig. 5 is a schematic view of a deep learning model 300A according to another embodiment. As illustrated in Fig. 5, the process of updating the deep learning model 300A (machine learning model) may be performed by, for example, based on information recorded in a database 400 of a responsible department that handles the project, learning items with a high degree of relevance to the responsible department. From such a viewpoint, the project support system 10 may be configured to cause at least one computer to execute a process of acquiring information recorded in the database 400 of the responsible department that handles the project.

For example, as illustrated in Fig. 5, the project support system 10 may be configured so that matters with a track record of being handled by each department and items planned to be handled by each department are learned as training data 302 by the machine learning model. The matters with a track record of being handled by each department and the items planned to be handled by each department may be contained, for example, in the information retrieved from the database 400 used in each department. In other words, the database 400 used in each department records information 303 handled by each department. For example, the database 400 may record resulting documents that come out of the responsible work of each department on a responsible department basis. The project support system 10 may be configured to be accessible to the database 400 that records the information 303 handled by each department through a network. In this case, the project support system 10 may access the database 400 used in each department to acquire the information 303 handled by each department as the training data 302. The information 303 handled by the department may include information on drawings, structural design documents, circuit diagrams, circuit design documents, test results, and the like.

In this case, the deep learning model 300A learns, based on the information recorded in the database 400 of a responsible department that handles the project, items having a high degree of relevance to the responsible department. Thus, by training the deep learning model 300A based on the information recorded in the database 400 of a responsible department that handles the project, the information 303 handled by each department is updated appropriately. This allows the deep learning model 300A to present a department having high relevancy to the requirement contents required in a project more accurately.

In this case, as illustrated in Fig. 1, the project support system 10 may further include a department information storage section 11b that acquires keywords from the information recorded in the database 400 (see Fig. 5) of responsible departments that handle the project and stores the keywords in association with department IDs. In the department information storage section 11b, keywords associated with the departments are recorded and accumulated. For example, keywords may be extracted from the information, drawings, structural design documents, circuit diagrams, circuit design documents, test results, and the like that are recorded in the database 400 of the responsible department handling the project, and the extracted keywords may be recorded in association with department IDs. The keywords may be language having a high degree of importance in order to extract departments having high relevancy, which may be words, phrases, collective expressions, and the like.

The second process s2 of identifying a responsible department having high relevance to the requirement content recorded in the requirement data 100 may use, for example, a machine learning model configured to enter the requirement data obtained in the first process s1 into the input layer and to obtain the department ID of the responsible department having a high degree of relevance to the requirement content recorded in the requirement data 100. The machine learning model may be a pre-trained machine learning model (for example, deep learning model 300) that is trained in advance so as to identify a responsible department having high relevance to the requirement content recorded in the requirement data 100 based on the keywords stored in the department information storage section 11b. Furthermore, the machine learning model may be configured to extract a word contained in or associated with the requirement data 100, and to identify a responsible department having a high degree of relevance to the requirement content recorded in the requirement data 100 based on the extracted word and the keywords stored in the department information storage section 11b.

Although the deep learning models 300 and 300A are shown as examples of the machine learning model herein, the project support system 10 may not necessarily use the deep learning model 300 or 300A. The project support system 10 may include, for example, means for storing resulting documents that come out of the responsible work of each department on a responsible department basis and accepting data of required specifications and target specifications relating to the development item by item, and means for assigning a responsible department to each of the item in the required specifications and the target specifications according to the degree of relevance of the resulting documents stored for each responsible department with the required specifications and the target specifications. From such a viewpoint, the means for assigning a responsible department to each of the item in the required specifications and the target specifications according to the degree of relevance of the resulting documents stored for each responsible department with the required specifications and the target specifications may use not only a deep learning model but also a machine learning model.

From such a viewpoint, in the project support system 10, the degree of relevance may be associated with responsible departments, focusing on words in items of the required specifications and the target specifications. For example, the degree of relevance may be associated with responsible departments, focusing on relationships between a plurality of words in items of the required specifications and the target specifications. The degree of relevance may be weighted according to words.

Such a project support system utilizes a machine learning model, such as a neural network model and the deep learning models 300 and 300A, to identify a responsible department having high relevancy to each of the requirement contents required in the project. Therefore, it is easier to make an implementation plan of the project, for example, by examining the output data 200 as a basis.

Various embodiments of the invention have been described hereinabove according to the present disclosure. Unless specifically stated otherwise, the embodiments described herein do not limit the scope of the present invention. It should be noted that various other modifications and alterations may be possible in the embodiments of the invention disclosed herein. In addition, the features, structures, or steps described herein may be omitted as appropriate, or may be combined in any suitable combinations, unless specifically stated otherwise.

As has been described above, the present description contains the disclosure as set forth in the following items.

### Item 1:

A project support system including:
at least one processor configured to execute:
a first process of acquiring requirement data recording information on a requirement content required in a project; and
a second process of identifying a responsible department having high relevance to the requirement content recorded in the requirement data.

### Item 2:

The project support system according to item 1, wherein:
the second process is configured to enter the requirement data obtained in the first process into an input layer of a machine learning model and to obtain the responsible department having a high degree of relevance to the requirement data from an output layer thereof; and
the machine learning model is a pre-trained machine learning model trained based on training data recording correlations between requirement data recording the information on requirement contents required in projects and predetermined responsible departments handling the projects.

### Item 3:

The project support system according to item 2, wherein the machine learning model is a deep learning model.

### Item 4:

The project support system according to item 2 or 3, wherein the at least one processor is further configured to execute a process of updating the machine learning model using, as additional training data, corrected data containing corrected relationships with responsible departments that are output from an output layer of the deep learning model.

### Item 5:

The project support system according to any one of items 2 through 4, wherein the at least one processor is further configured to execute:
a process of acquiring information recorded in a database of a responsible department handing the project; and
a process of updating the machine learning model by training the machine learning model to learn an item having a high degree of relevance to the responsible department based on the information recorded in the database of the responsible department handling the project.

### Item 6:

The project support system according to any one of items 1 through 5, further including a department information storage section storing keywords obtained from information recorded in a database of a responsible department handling the project in association with the department.

### Item 7:

The project support system according to item 6, wherein:
the second process is configured to enter the requirement data obtained in the first process into an input layer of a machine learning model and to obtain the responsible department having a high degree of relevance to the requirement data from an output layer thereof; and
the machine learning model is a pre-trained machine learning model trained so as to identify a responsible department having high relevance to the requirement content recorded in the requirement data based on the keywords stored in the department information storage section.

### Item 8:

The project support system according to item 7, wherein:
the machine learning model is configured to extract a word contained in or associated with the requirement data, and to identify a responsible department having a high degree of relevance to the requirement content recorded in the requirement data based on the extracted word and the keywords stored in the department information storage section.

### REFERENCE SIGNS LIST

- 10: Project support system
- 11: Recording unit
- 11a: Department ID recording section
- 11b: Department information storage section
- 12: Processing unit
- 21: Input unit
- 22: Output unit
- 40: Machine learning model
- 100: Requirement data (input data)
- 101: Column for requirement ID
- 102: Column for required content
- 103: Column for department
- 200: Output data
- 201: Column for requirement ID of output data 200
- 202: Column for requirement content
- 203: Column for department of output data 200
- 280: Document data
- 300, 300A: Deep learning model
- 301: Corrected data
- 302: Training data
- 303: Information handled by each department
- 400: Database

## Claims

1. A project support system (10) comprising:
at least one processor configured to execute:
a first process (s1) of acquiring requirement data (100) recording information on a requirement content required in a project; and
a second process (s2) of identifying a responsible department having high relevance to the requirement content recorded in the requirement data (100).

2. The project support system (10) according to claim 1, wherein:
the second process (s2) is configured to enter the requirement data (100) obtained in the first process (s1) into an input layer of a machine learning model and to obtain the responsible department having a high degree of relevance to the requirement data (100) from an output layer thereof; and
the machine learning model (40) is a pre-trained machine learning model (40) trained based on training data recording correlations between requirement data (100) recording the information on requirement contents required in projects and predetermined responsible departments handling the projects.

3. The project support system (10) according to claim 2, wherein the machine learning model (40) is a deep learning model.

4. The project support system (10) according to claim 2 or 3, wherein the at least one processor is further configured to execute a process of updating the machine learning model (40) using, as additional training data, corrected data (301) containing corrected relationships with responsible departments that are output from an output layer of the machine learning model (40).

5. The project support system (10) according to any one of claims 2 through 4, wherein the at least one processor is further configured to execute:
a process of acquiring information recorded in a database (400) of a responsible department handing the project; and
a process of updating the machine learning model (40) by training the machine learning model (40) to learn an item having a high degree of relevance to the responsible department based on the information recorded in the database (400) of the responsible department handling the project.

6. The project support system (10) according to any one of claims 1 through 5, further comprising:
a department information storage section (11b) storing keywords obtained from information recorded in a database of a responsible department handling the project in association with the department.

7. The project support system (10) according to claim 6, wherein:
the second process (s2) is configured to enter the requirement data (100) obtained in the first process (s1) into an input layer of a machine learning model (40) and to obtain the responsible department having a high degree of relevance to the requirement data (100) from an output layer thereof; and
the machine learning model (40) is a pre-trained machine learning model (40) trained so as to identify a responsible department having high relevance to the requirement content recorded in the requirement data (100) based on the keywords stored in the department information storage section (11b).

8. The project support system (10) according to claim 7, wherein:
the machine learning model (40) is configured to extract a word contained in or associated with the requirement data (100), and to identify a responsible department having a high degree of relevance to the requirement content recorded in the requirement data (100) based on the extracted word and the keywords stored in the department information storage section (11b).
